# EUROPEAN PATENT SPECIFICATION

(11) **EP 1 555 453 B1**
(45) Date of publication and mention of the grant of the patent: **10.10.2007**
(21) Application number: 04107038.4
(22) Date of filing: 29.12.2004
(51) Int. Cl.: F16F 9/02, F16F 9/48

(54) **Gas spring with a variably slowed-down operating pattern**
Luftfeder mit variabel abgebremsten Betriebsverhalten
Ressort à gaz avec un mode de fonctionnement à ralentissement variable

(30) Priority: 15.01.2004 IT PN20040003
(43) Date of publication of application: 20.07.2005
(73) Proprietor: BORDIGNON Silvano S.p.A., 36028 Rossano Veneto VI (IT)
(72) Inventor: Bordignon, Silvano, 36027, Rosà (VI) (IT)
(74) Representative: Giugni, Valter

(56) References cited:
- EP-A- 0 002 144
- DE-A1- 10 024 499
- DE-C- 51 626
- DE-U- 1 886 350
- US-A- 4 948 103

## Description

The present invention refers to a gas spring that has been so designed, and provided with such characteristics, as to make it particularly suitable for use in conjunction with sheet-metal forming presses.

In particular, the present invention relates to a kind of gas springs, in which the operation during the return strike of the piston is substantially variable in a pre-settable manner, i.e. according to a pre-settable pattern.

The present invention is intended to substantially constitute an improvement over the gas spring covered in the EP publication No. 1 186 975 A2, to which reference should therefore be made as far as the technical context, i.e. the background, and the discussion of the prior art is concerned, so that such discussion of and references to the prior art can be omitted here for the sake of brevity.

Gas springs for the above-indicated kind of applications are also disclosed in the EP publication No. 1 074 759, which has been cited as a priority document to the above-mentioned EP 1 186 795 A2.

Gas springs of this kind are largely known in the art to share, both from a manufacturing and a functional point of view, two major drawbacks, the first one of which relates to the fact that, during the return or backward stroke of the piston, the slowed-down displacement of the same piston, which on the other hand is a desired feature that is actually achieved through the inventions disclosed in the above-cited EP documents, ultimately leads to an unavoidable lengthening of the cycle of possible utilization of the spring and, as a result, puts a kind of constraint on the achievable overall productivity of the equipment in which the same spring is installed. It should in fact be reminded here that the real reason why the return stroke of the piston is intentionally slowed down lies in avoiding the violent backward blow of the piston rod in the final phase of the return strike, when the pressure or force that the same spring is due to dampen is no longer acting on said rod. In some typical applications, it would therefore be sufficient if the reduction in the speed of said return or backward stroke is brought about solely in the very short period of time preceding the end of the return stroke of the piston.

However, up to these days this drawback has been solved by slowing down the backward displacement speed of the piston throughout the return stroke of the same piston.

This of course does not fail to lead to a clearly undesired lengthening of the time taken by the piston to go through its entire return stroke, since it has to cover at a reduced speed also that portion of the return stroke thereof, which could on the contrary be gone through at a higher speed without any problem at all, provided that the piston is then duly braked, i.e. slowed down in the phase that immediately precedes the end of the return stroke thereof.

The second one of the above-mentioned major drawbacks refers to the manufacturing costs of these springs. In fact, the provision of a check valve, albeit of a simplified design, generates manufacturing complications and costs that are less and less acceptable in a highly competitive manufacturing ambient.

Furthermore, such check valve has an inertia, in the phase of transition from a state to another one, which, when operating at high production rates, may give rise to undesired side-effects, further to constituting a restraint limiting the possibility of achieving an increased productivity, i.e. a higher output rate.

From DE 10024499B4 a gas spring is divulged, showing that during the compression stroke the reaction force acting on the piston is depending also on the position itself of the piston into the cylinder body.

However during the return stroke the piston movement is fully not controlled and not slowed down, which causes a typical drawback well known to the skilled man.

It would therefore be desirable, and it is actually a main object of the present invention, to provide a solution for creating gas springs comprising a working piston and a cylinder adapted to slidably receive and accommodate said working piston, which operate in a manner that the backward displacement speed of the working piston is actually slowed down solely in the final phase of the return stroke thereof, while taking place at normal speed throughout the preceding portion of the same return stroke.

Within this general object, it is a purpose of the present invention to provide such gas springs that are capable of being produced to operate without the limitations deriving from the provision of a check valve, that are particularly cost-effective, and that are very compact in size and, at the same time, very simple in the construction thereof, thereby ensuring great reliability in the prolonged operation thereof.

These aims, along with other features of the present invention, are reached in a gas spring made and operating as recited in the appended claims.

Features and advantages of the present invention will anyway be more readily and clearly understood from the description that is given below by way of non-limiting example with reference to the accompanying drawings, in which:
- Figure 1 is a symbolical, schematical view of the median section along the axis of symmetry of a gas spring according to the prior art;
- Figure 2 is a corresponding symbolical view of the median section along the axis of symmetry of a gas spring according to a first embodiment of the present invention;
- Figure 3 is a corresponding cross-sectional view of the piston of the gas spring illustrated in Figure 2;
- Figures 4 and 5 are views of the gas spring illustrated in Figure 2 in two distinct operating phases thereof, respectively;
- Figure 6 is a cross-sectional view of three distinct embodiments of a control device for controlling the operation of a gas spring according to the present invention;
- Figures 7 through to 15 are cross-sectional views of a gas spring with a definite, different embodiment of a corresponding control device, in five respective operating phases thereof;
- Figure 12 is a median cross-sectional view of a gas spring with yet a different embodiment of the corresponding control device;
- Figures 13 and 14 are enlarged cross-sectional views of a portion of the piston illustrated in Figure 12;
- Figures 15A and 15B are symbolical, simplified views of a construction feature of the present invention, in two respective embodiments thereof.

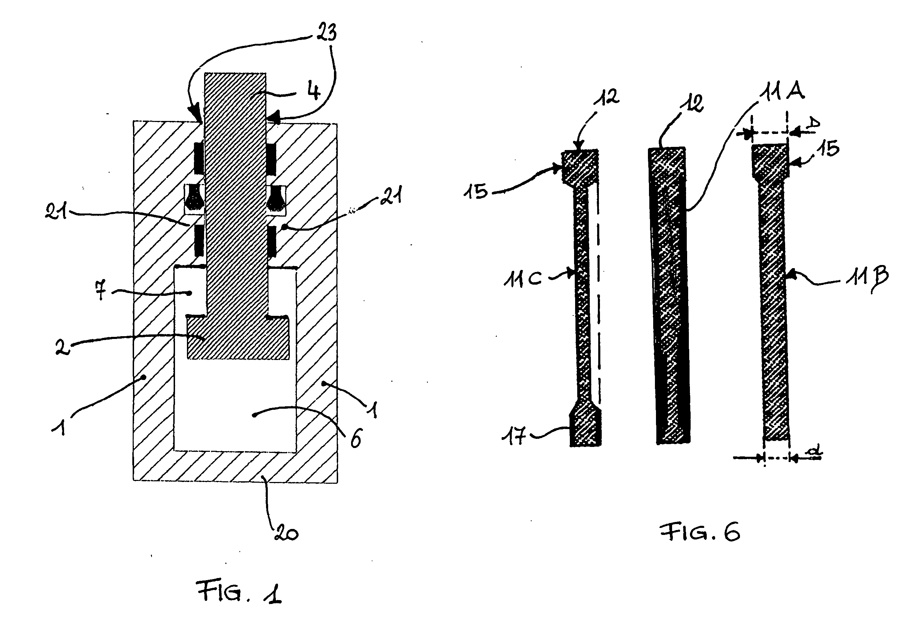

With reference to Figure 1, a gas spring according to the prior art can be noticed to essentially comprise:
- a hollow cylinder 1, provided with two bases 20 and 21,
- a piston 2 accommodated inside said hollow cylinder 1 and adapted to tightly slide relative to the inner walls thereof,
- a stem or rod 4 that is firmly connected with said piston 2 on a side thereof, and adapted to be alternately displaced inwards and outwards relative to said hollow cylinder 1 consistently with the displacement of said piston 2, in which said rod 4 moves out of said hollow cylinder by passing through an appropriate opening 23 provided in the base 21 of said hollow cylinder 1;
- a first chamber 6 arranged inside said hollow cylinder and delimited by said piston and other inner walls of said hollow cylinder, and situated on the opposite side of said rod 4 with respect to said piston
- a second chamber 7 arranged inside said hollow cylinder and delimited by said piston and other inner walls of said hollow cylinder, and not containing said rod 4; in practice, said two chambers 6 and 7 use up substantially the whole of the inner volume of said hollow cylinder remaining after subtraction of the volume taken, i.e. occupied by the piston and the related rod.

Readily apparent is also the fact that, while the first chamber 6 has a volume that varies solely as a function of the piston stroke and the contour of the inner walls of the hollow cylinder, as this shall be described and explained in greater detail further on, the second chamber 7 has a volume that varies not only as a function of the piston stroke and the contour of the inner walls of the hollow cylinder, but is also subject to being of course progressively reduced by the increasing volume being occupied by the inner portion of the rod 4 as the latter is gradually inserted, i.e. moves gradually into said hollow cylinder 1.

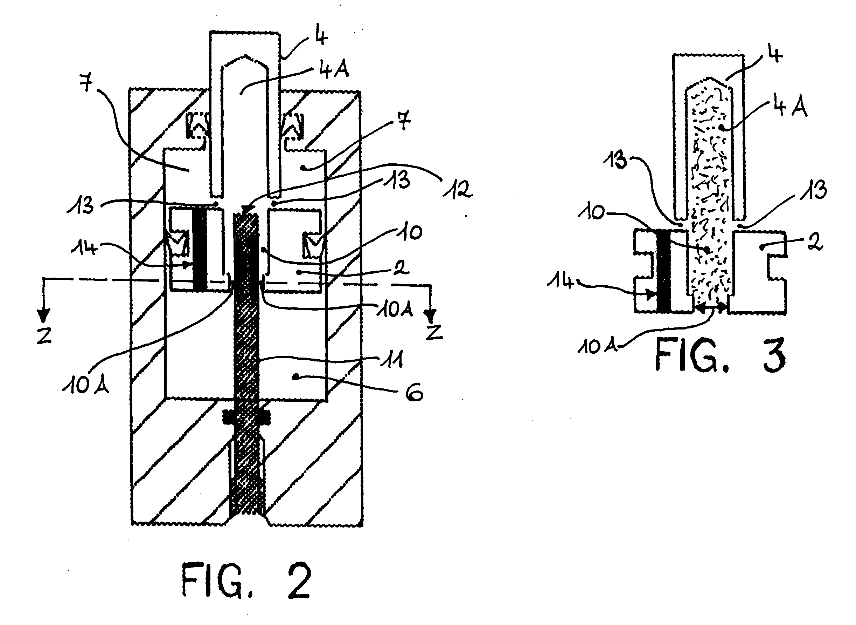

Described up to this point has therefore been a gas spring of a traditional type, as it is largely known in the art: according to the present invention, such a gas spring is improved through the embodiment of the following modification:
- with particular reference to Figure 2, in the body of the piston 2 there is provided a through-aperture 10 that enables said two variable-volume chambers 6 and 7 to communicate with each other; in particular, said through-aperture is located at the centre of the piston and, in the section thereof that is contiguous to the chamber 6, this aperture is provided with a constriction 10A, which anyway ensures a passage between said two chambers.

In the rod 4 connected to said piston there is furthermore provided a cavity 4A that lies substantially in a line with said through-aperture 10 in the piston 2 and joins therewith without any interruption, so that said cavity 4A and said through-aperture 10, along with the constriction 10A thereof, practically form a single, unitary volume provided in the body of the piston/rod assembly, as this on the other hand is more clearly illustrated in Figure 3.

The passage between the cavity 4A and the chamber 7, and therefore between said two chambers 6 and 7, is ensured by providing one or more passages 13 transversally across the body of said rod 4 between said cavity 4A and the area thereoutside (which corresponds to the second chamber 7); these passages 13 are furthermore provided in respective positions of said rod that are contiguous to said piston 2, as this most clearly appears in the Figures.

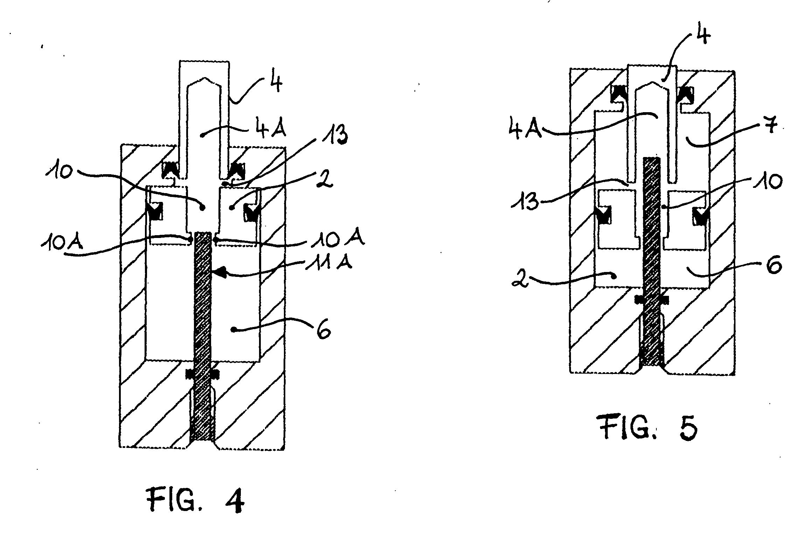

On the base 20 of said cylinder there is provided an elongated cylindrical member 11 protruding inwards, i.e. into said chamber 6 by such length, i.e. to such depth that the terminal head 12 thereof enters by a short length into said through-aperture 10, or at least said constriction 10A, when the piston 2 is in its top dead centre, as best shown in Figure 4.

In addition, said cavity 4A has such inner length and such inside diameter that, when the piston is completely inserted, as this is shown in Figure 5, said elongated cylindrical member 11 is fully received into said volume formed by the cavity 4A joining with said through-aperture 10.

Finally, provisions must be taken in view of ensuring that the outside diameter of said elongated cylindrical member 11 is capable of freely moving into said constriction 10A, by passing without any interference of a mechanical nature therethrough. However, the coupling of this elongated cylindrical member with said constriction must be such as to be able to provide a choke through which the gas flow can be repressed, i.e. slowed down when passing from the chamber 7 into the chamber 6 during the return or backward stroke of the piston, thereby slowing it down in its displacement.

As far as the actual shape and dimensions of this elongated member 11 are concerned, they shall be described in a more detailed manner further on.

Said gas spring is furthermore completed by a means provided to allow for a free passage of the gas from the chamber 7 into the chamber 6 during the forward stroke of the piston. This means, which may be normally provided in the form of a simple check valve, is symbolically illustrated in Figure 2 as a general means 14 arranged somewhere in the piston 2 and connected with both said chambers 6 and 7.

The actual configuration, the related dimensions and the position assigned to the above-cited parts, elements and members relative to each other may of course be embodied in a number of different manners, each one of which can be appropriately and specifically selected so as to attain a given result in an optimum way.

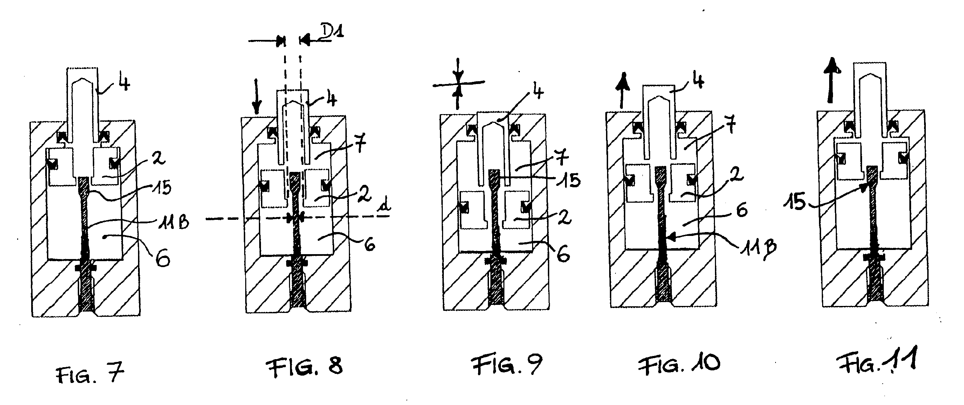

Some examples of the different possibilities for the gas springs of the present invention to be embodied are given below with particular reference to the embodiment and mode of operation of the above-mentioned elongated cylindrical member, which is illustrated in Figure 6 in three different embodiments 11A, 11B and 11C thereof.

### EXAMPLE 1

With the first above-cited embodiment 11A the possibility is given to produce a gas spring as it is represented, albeit in a simplified manner, in Figures 4 and 5; in this particular embodiment, the configuration and the relative dimensions of the various component parts are such as to enable said elongated member 11A, which in this example may take the form of a cylinder, to be of such length as to be able to move into the constriction 10A in the following manner:
- when the rod is fully withdrawn and the piston is in its top dead centre (largest volume of the chamber 6), the terminal head 12 of said elongated member is still inserted in said constriction 10A; the resulting effect is that, during the return or backward stroke of the piston, the gas contained in the chamber 6 is ejected therefrom and transferred into the chamber 7 by passing through the choke created by the constriction 10A as partially obstructed by the head 12 of the elongated member 11A, whereby said flow of gas is repressed, i.e. slowed down. The same gas then flows into the chamber 7 through said passages 13 and, as an ultimate result, even the return or backward stroke of the piston is slowed down all along the displacement thereof.

It should most appropriately be noticed at this point that the elongated member 11A may take any other form differing from the cylindrical one, as long as this elongated member 11A has a cross-section that is constant along all planes extending orthogonally to the direction of displacement of the piston, while said constriction 10A shall of course be shaped in a corresponding manner all along its cross-section. Therefore, said elongated member 11A may also take a parallelepiped, prismatic or any similar form.

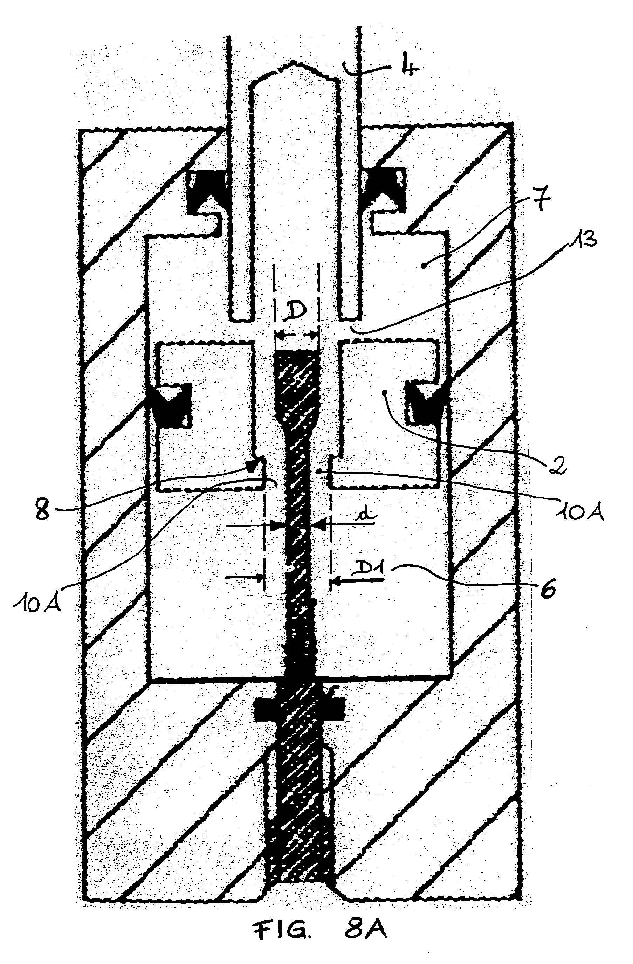

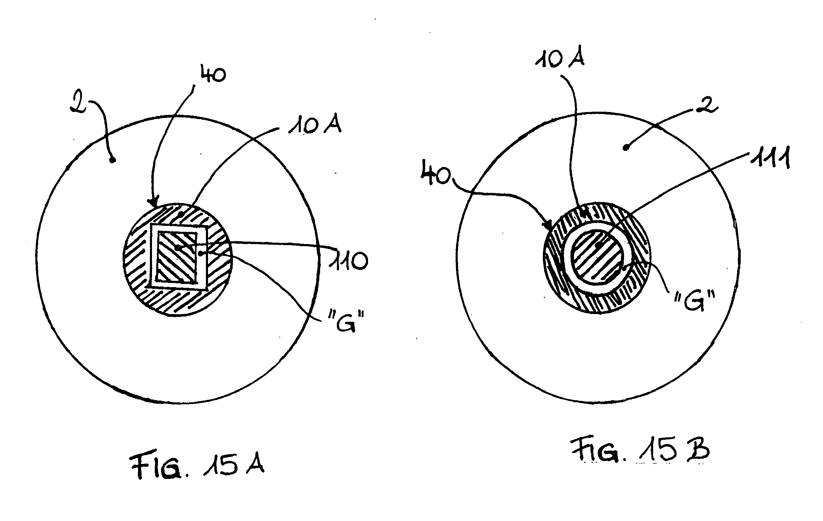

Figures 15A and 15B are cross-sectional views of the elongated member and the piston as viewed along the section plane Z-Z of Figure 2, in the case where said elongated member 11A is in the form of a parallelepiped 110, and in the case where it is in the form of a cylinder 111, respectively. In this connection, it will be readily appreciated that said section plane Z-Z is a plane extending orthogonally to the direction of displacement of the piston. For reasons of greater simplicity, the piston and the constriction keep being indicated at 2 and 10A, respectively, in both said representations, whereas the closed-loop delimiting line between said through-aperture 10 and the related constriction 10A (see also Figure 8A, which is practically an enlarged view of Figure 8) is conventionally indicated at 40.

For it to be able to ensure proper operation, said constriction 10A must of course have a cross-section that is fully similar, i.e. have the same shape, as the elongated member, however with a slightly increased size in view of providing that clearance G that is considered necessary in order to enable these two elements to slide relative to each other without any interference, while at the same time ensuring the desired "choke" effect.

In general, a gas spring made in this way does not ensure any different result as compared with the one attainable with prior-art gas springs, actually. However, the improvement lies in this case in the fact that said elongated member 11 is attached to the base 20 in a removable manner, so that it can be most conveniently taken apart and be in an equally convenient manner replaced with a different elongated member having different characteristics, so as to enable the gas spring to operate according to a different working pattern. Such practical advantage is not ensured by prior-art gas springs which are generally provided with choking means that are fixed relative to the piston, or integral with the piston itself or even the outer casing, and therefore not alterable or modifiable.

### EXAMPLE 2

With reference to Figures 7 through to 11, the head portion of said elongated member 11B is formed by an enlarged portion 15 having a diameter D that is just slightly smaller than the diameter D1 of the corresponding constriction 10A, but sensibly larger than the diameter d of the central body portion of said elongated member (see Figure 8A).

At this point, it should be further noticed that even this enlarged portion may have any desired or suitable shape whatsoever, e.g. a cylindrical, prismatic, spherical or similar shape.

The sole two constraints that need to be complied with are the same as the ones that have been described afore in connection with the EXAMPLE 1 with reference to the cross-section of the elongated member 11A, with the exception that, in this particular case, they need to be solely applied to said enlarged portion 15, i.e.:
a) - the projection of said enlarged portion on a plane extending orthogonally to the direction of displacement of the piston must be such as to correspond to the cross-section of said constriction 10A on the same plane,
b) - while allowing however for the provision of that clearance that is considered necessary in order to enable these two elements to slide relative to each other without any interference, and at the same time ensure the desired "choke" effect.

The way in which a gas spring of the above-described kind operates is as follows: at the initial moment (Figure 7), the rod is in its fully extracted condition, the second chamber 7 has practically no volume, and the check valve 14 is closed. The enlarged portion 15 of the elongated member 11B is positioned in correspondence to the constriction 10A, thereby forming a choke that almost completely obstructs the related port.

In a subsequent phase of the piston stroke (Figure 8), the piston is displaced to the point at which it lies at the same height as the central body portion of the elongated member 11B; owing to the diameter d of this central body portion of said elongated member being sensibly smaller than the diameter D1 of the constriction 10A, the gas is capable of flowing freely between the two chambers 6 and 7, and is compressed until the compression or forward stroke of the piston is completed, as this occurs in the gas springs of a traditional kind.

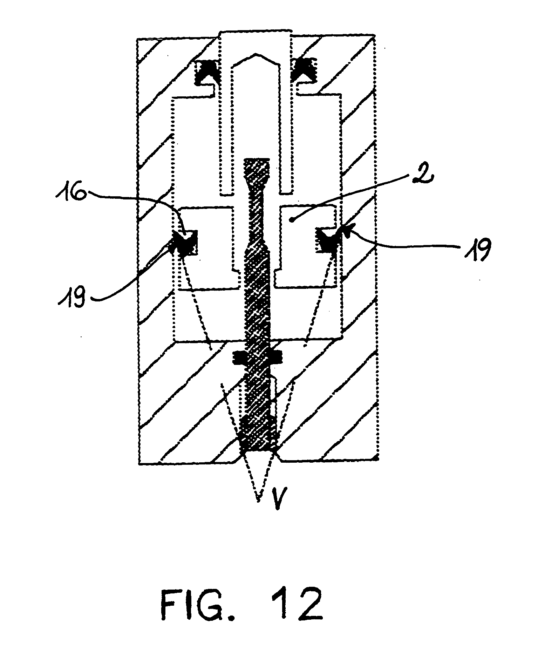

The process then continues into the end phase of the compression stroke of the piston (Figure 9), in which the piston is pushed down into its bottom dead centre; from this moment on, the piston starts with its backward or return stroke.

In the next phase (Figure 10), in fact, the piston starts displacing backwards along its return stroke. In this phase, however, the piston is not braked, i.e. slowed down in its displacement owing to the difference existing between the diameters d and D1. It should anyway be noticed that, in this phase, a high displacement speed of the piston in its backward stroke is not a disadvantage in itself; quite on the contrary it may even prove of advantage, since it enables the operating cycle time of the gas spring to be shortened.

In the yet subsequent phase (Figure 11), the piston moves back into its top dead centre, so that the enlarged portion 15 regains its position at the height of the constriction 10A; in this phase, therefore, the afore described choke is re-established and, as a result, the piston is braked, i.e. slowed down during the last portion of its backward or return stroke.

Most obviously, the actual extent of such braking or slowing-down effect and the duration thereof will be a direct function of a variety of parameters, including mainly the width of the choke and the moment - as referred to the return stroke of the piston - at which this choke is established, and therefore ultimately the dimensions and the relative position of the various mechanical parts involved.

Those skilled in the art are clearly capable of most easily determining these parameters and dimensions in accordance with the required characteristics and mode of operation.

From this moment on, the gas springs behaves as in the previously described case, i.e. with a slowed-down displacement of the piston in the remaining portion of its return stroke.

Following advantages should in particular be noticed:
a) the gas spring has a piston that covers its return or backward stroke at a high average speed, almost similar to the speed of a traditional gas spring, since the piston fails actually to be slowed down through a major portion of its return stroke,
b) while a desired braking effect is anyway obtained just when it is actually needed, i.e. immediately before the end of the backward or return stroke of the piston, since in this sub-phase of said stroke, the piston is slowed down by the effect of the following particular construction and combination of parts: elongated member/piston/constriction/enlarged portion 15, as described and exemplified in the Figures.
c) A third important advantage of the above-described embodiment comes about almost automatically if one just considers the check valve; as a matter of fact, the purpose of such valve is to enable gas to freely flow from the chamber 6 to the chamber 7 during the compression phase of the spring, while preventing said flow from occurring during the return phase of the same spring, in particular during the final portion of said return phase. However, during this final portion of the return stroke of the piston the flow of gas is automatically repressed by the choke forming between the enlarged portion 15 and the constriction 10A, so that the check valve id practically of no use during this critical sub-phase.

More than that, this check valve is of no practical use even during the compression phase of the spring, since the larger gap forming between the constriction 10A, having a diameter D1, and the central body portion of the elongated member 11, having a diameter d that is sensibly smaller than the diameter D1, enables the gas to start flowing freely between the two chambers 6 and 7 soon after the beginning of the compression stroke and to continue doing so up to the end of the same stroke, thereby performing as a check valve in its "open" state.

The ultimate result of all these circumstances is that, in certain applications and under particularly favourable conditions, said check valve can be fully omitted, thereby achieving quite clear and obvious benefits in terms of costs, simplified construction and reliability of the whole spring.

### EXAMPLE 3

In this third embodiment, said elongated cylindrical member takes the form illustrated at 11C in Figure 6 and Figure 12, in which it has a second enlarged portion 17 provided at the opposite extremity of said elongated member 11C with respect to the one featuring said first enlarged portion 15. According to this further embodiment of the present invention a gas spring is provided, which - referring again to the explanations that have been already set forth in connection with the preceding example - features a characteristic return stroke including an intermediate sub-phase performed at regular, i.e. non-braked speed according to the prior art, and the two extreme, i.e. initial and final sub-phases that are on the contrary performed at a slowed-down speed. This situation appears to be of advantage in all those cases in which the behaviour, i.e. the displacement pattern of the piston is desirably controlled even during the initial phase of the return stroke thereof. This may for instance be the case when sheet-metal is being formed in a particularly delicate manner, so as to preventing it from being immediately damaged by too violent an initial reaction of the gas springs used in the process.

The same considerations as set forth above concerning the shape and the dimensions of said enlarged portions 15 and 17 relative to the respective constriction 10A - which shall not be repeated here for obvious reasons of brevity - apply of course also in the case of this example.

Again, those skilled in the art will be able to readily appreciate that the advantages obtained with the afore described exemplary embodiments are fully achievable also with this embodiment, so that they shall not be explained here any further.

Furthermore, the possibility for the elongated member 11 to be given any desired one out of a variety of different contours enables the gas spring to be used in both general-purpose and dedicated applications that may differ even substantially from each other. As a general example, the case may be cited here of a gas spring, in which the return stroke of the piston has not to be braked, i.e. slowed down in the final portion thereof, as assumed hereinbefore, but rather in the initial portion thereof; in this case, selecting and using a kind of elongated member as the one indicated at 11C in Figure 6, but lacking the upper enlarged portion 15 and, therefore, provided with the sole lower enlarged portion 17 (not shown in the Figures for reasons of greater clarity and simplicity, owing to it being practically identical to the elongated member 11C, without the enlarged portion 15 thereof), is all that is needed to obtain the desired operating pattern. This is a particular, simplified case of the Example 3 illustrated above and it will be most readily appreciated that such configuration of an elongated member made in this manner causes the return stroke of the piston to be slowed down only during the initial phase thereof.

With reference now to Figures 12, 13 and 14, the present invention allows for a particular improvement: in fact, when a check or non-return means must in any case be provided between said two chambers 6 and 7 so as to ensure a flow of gas in a single direction only, the traditionally used check valve arranged across the piston is advantageously replaced by a ring-shaped unidirectional elastic seal 19 placed between the outer wall of the piston and the inner wall of the cylindrical casing of the gas spring; this seal is inserted in an annular groove 16 extending all around the outer wall of the piston and is shaped so as to feature a flexible protrusion or lip 18 projecting from said groove 16 with a definite inclination, but radially thereto, so that the outer portion of said seal 19 appears in the form of a frustum of cone having its axis coinciding with the axis of the gas spring.

The inclination of said flexible lip 18 is such that the above-cited frustum of cone would have the vertex V thereof on the axis of the gas spring on the side of said chamber 6, and the base thereof on the side of said chamber 7. On the other hand, no further, too complicated description is needed here to explain the geometry of this seal 19, since the illustrations in the Figures are self-explaining.

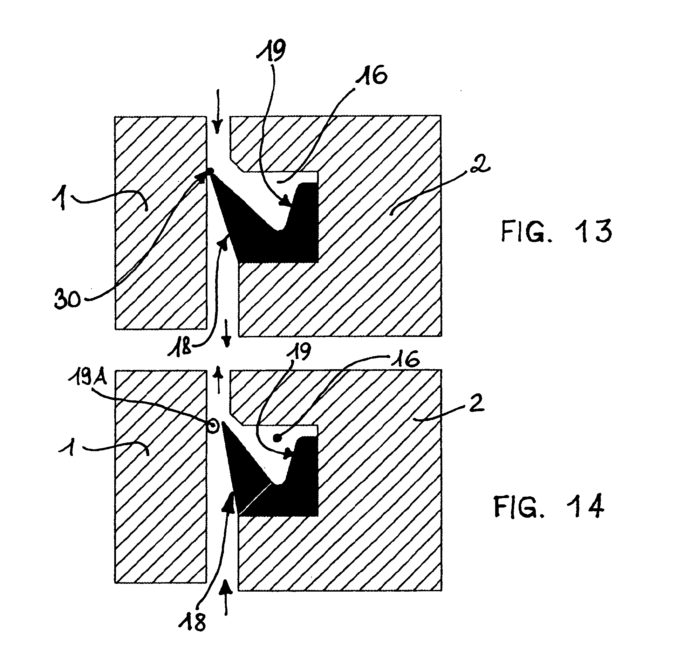

The operating mechanism of this seal is therefore readily appreciable by those skilled in the art: in fact, during the compression phase of the gas spring the gas presses against said flexible lip 18 from the chamber 6, thereby causing it to deflect against the same piston (Figure 14) and clearing a passageway 19A between the piston and the inner cylindrical wall of the casing, through which the gas is then free to flow from the chamber 6 into the chamber 7.

Conversely, during the return stroke of the piston (Figure 13), the pressure exerted by the gas flowing in from the chamber 7 similarly tends to cause said flexible lip to deflect in a consistent direction; however, when deflecting in this manner, the lip 18 comes up, at the point indicated at 30, against the inner wall of the cylindrical cavity of the casing, thereby being caused to stop in that position. This of course causes said clearance or passageway 19 to be shut and, as a result, the impossibility for the gas to flow from the chamber 7 into the chamber 6. On the other hand, the inherent simplicity of the above-proposed solution does not need any further explanation.

In addition, the feasibility of this solution is fully ensured by seals of this kind being readily and widely available on the market.

A further advantageous improvement may be easily obtained by applying said elongated member 11A , 11B,11C not in a stable and fixed manner, but rather removably on to the bottom of the base 20, or preferably therethrough, as this is symbolically illustrated in the Figures. According to this improvement, said elongated members 11A, 11B, 11C can be introduced from the outside of the same base and screwed into a respective threaded hole 30 (see Figure 4), exactly as in the case of a common bolt.

Those skilled in the art will at this point be fully capable of readily appreciating that, with this improvement, the possibility is practically given for some operating characteristics - even major or basic ones - of a same gas spring to be suitably modified by simply and easily replacing the sole elongated member, without any need for the gas spring itself to be taken apart.

A further advantageous improvement may also be easily obtained by arranging and setting such operating means and modes as to ensure that a single and same elongated member, generally indicated at 11, can be inserted in said hole 30 to selectively differentiated depths to be blocked in a releasable manner in such positions as selected each time according to the requirements. As it can most readily be appreciated, this enables the operating characteristics of a same gas spring according to the invention to be most easily and quickly be modified, even within rather wide variation ranges, by simply adjusting the insertion depth of said single and same elongated member.

Said means for adjusting the insertion depth of the elongated member are fully within the ability of those skilled in the art, so that they will not be dealt with any further in this context.

This last improvement is of course fully compatible with the possibility for said elongated member to be replaced with another one having different characteristics; in this way and, ultimately, with a single gas spring body, the possibility is created for a wide spectrum of operating modes and patterns to be provided through simple and quick operations for adjusting and/or replacing the related elongated member.

## Claims

1. Gas spring, in particular of the type used in sheet-metal forming presses, comprising:
- a hollow, preferably cylindrical casing (1) having two opposite parallel bases (20, 21), in which a first base (21) is provided with a hole (23),
- a piston (2) adapted to slide within said hollow casing, said first base (21) forming an abutment member preventing said piston from sliding out of said hollow casing,
- a rod (4) rigidly fixed with an extremity thereof to a central portion of said piston and passing through said hole (23) of said first base (21),
- a first variable-volume chamber (6) and a second variable-volume chamber (7) provided inside said cylinder and separated from each other by said piston,
- in which said first variable-volume chamber (6) is delimited by a face of said piston and portions of the inner surface of said hollow casing (1) that do not contain said rod,
- means adapted to enable gas to flow in both directions to and from said two chambers with a selectively adjustable flow rate,
- an elongated member (11, 11A, 11B, 11C) arranged on the second base (20) of said hollow casing and projecting inwards into said first chamber (6),
- an aperture (10) provided to extend through the piston (2) and adapted to enable a portion of said elongated member (11) to move and be accommodated thereinto, and
- passageways (13) adapted to enable gas to flow from said aperture (10) into said second chamber (7), or vice-versa, **characterized**
**in that** between the inner wall of said hollow casing (1) and the outer cylindrical wall of said piston there is provided a not unidirectional seal oriented in such a way to prevent the passage of gas from said second variable volume chamber (7) into said first variable-volume chamber (6).

2. Gas spring according to claim 1, **characterized in that** said unidirectional seal (19) is provided with a flexible lip (18) annularly conformed in the shape of a frustum of cone arranged with its base facing said second chamber (7).

3. Gas spring according to claim 1 or 2, **characterized in that** said means also comprise a cavity (4A), provided within said rod (4), adapted to enable a respective portion of said elongated member passing through said aperture (10) to slide and be accommodated thereinto, said passageways being further provided between said cavity (4A) and said second chamber.

4. Gas spring according to claim 3, **characterized in that** said elongated member has:
- a shape (11A) ensuring a constant cross-section relative to the plurality of planes extending orthogonally to the direction of displacement of said piston, or
- a shape (11B) featuring a single enlarged portion (15) in correspondence to the extremity of said elongated member facing said piston, or
- a shape (1C) with an enlarged portion (15) provided at the extremity of said elongated member facing said piston, and a second enlarged portion (17) provided at the opposite extremity of said elongated member that lies adjacent to said second base (20), or
- a shape with a single enlarged portion (17) provided at the extremity of said elongated member that is adjacent to said second base (20).

5. Gas spring according to any of the preceding claims, **characterized in that** said aperture (10) in said piston (2) is provided with a constriction (10A) arranged contiguous to said first chamber (6).

6. Gas spring according to claim 4 or 5, **characterized in that** the diameter (D) of said first enlarged portion (15) is just slightly smaller than the diameter (D1) of said constriction (10A), and that the diameter (d) of the central body portion of said elongated member (11B, 11C) is significantly smaller than said diameter (D1) of said constriction (10A).

7. Gas spring according to any of the preceding claims, **characterized in that** during a portion of the compression stroke or the return stroke thereof, said elongated member (11, 11A, 11B, 11C) is selectively introduced in said aperture (10) and is moved away therefrom, bijectively depending on the position of said piston relative to said hollow casing (1).

8. Gas spring according to claim 2, **characterized in that** on the outer cylindrical surface of said piston (2) there is provided an annular groove (16), and that said unidirectional seal (19) is at least partially accommodated in said annular groove (16).

9. Gas spring according to any of the preceding claims, **characterized in that** in said second base (20) there is provided a through-bore (30), and that said elongated member (11, 11A, 11B, 11C) is applied removably from the outside under mutual, preferably screw-like, i.e. threaded engagement with said second base (20).

10. Gas spring according to any of the preceding claims, **characterized in that** said elongated member (11, 11A, 11B, 11C) is adapted to be provided in such a manner as to be capable of being releasably blocked in selectively definable positions relative to said base.

## Patentansprüche

1. Gasfeder, insbesondere eine solche derjenigen Art, die in Metallblech-Formpressen verwendet wird, umfassend:
- ein hohles, bevorzugt zylindrisches Gehäuse (1) mit zwei einander gegenüber angeordneten parallelen Basen (20, 21), wobei eine erste Basis (21) mit einem Loch (23) versehen ist,
- einen Kolben (2), der dazu geeignet ist, innerhalb des hohlen Gehäuses zu gleiten, wobei die erste Basis (21) ein Anschlagelement bildet, das verhindert, dass der Kolben aus dem hohlen Gehäuse gleitet,
- eine Stange (4), die fest an einem ihrer Endpunkte an einem zentralen Bereich des Kolbens befestigt ist und sich durch das Loch (23) in der ersten Basis (21) erstreckt,
- eine erste Kammer (6) mit variablem Volumen und eine zweite Kammer (7) mit variablem Volumen, die innerhalb des Zylinders angeordnet und durch den Kolben voneinander getrennt sind,
- wobei die erste Kammer (6) mit variablem Volumen durch eine Fläche des Kolbens und durch Bereiche der Innenfläche des hohlen Gehäuses (1) begrenzt ist, welche die Stange nicht enthalten,
- Mittel, die es zulassen, dass Gas in beiden Richtungen in und aus den beiden Kammern mit einer selektiv einstellbaren Durchflussrate strömen kann,
- ein längliches Element (11, 11A, 11B, 11C), das an der zweiten Basis (20) des hohlen Gehäuses angeordnet ist und einwärts in die erste Kammer (6) vorsteht,
- eine Öffnung (10), die sich durch den Kolben (2) erstreckt und dazu geeignet ist, es einem Bereich des länglichen Elementes (11) zu ermöglichen, sich in dieser zu bewegen und aufgenommen zu werden, und
- Durchgänge (13), die es einem Gas ermöglichen, aus der Öffnung (10) in die zweite Kammer (7) oder umgekehrt zu strömen, **dadurch gekennzeichnet, dass** zwischen der Innenwand des hohlen Gehäuses (1) und der zylindrischen Außenwand des Kolbens eine unidirektionale Dichtung vorgesehen ist, die derart ausgerichtet ist, dass der Durchgang von Gas aus der zweiten Kammer (7) mit variablem Volumen in die erste Kammer (6) mit variablem Volumen verhindert wird.

2. Gasfeder nach Anspruch 1,
**dadurch gekennzeichnet, dass**
die unidirektionale Dichtung (19) eine flexible Lippe (18) aufweist, die eine ringförmige Kegelstumpfform aufweist und derart angeordnet ist, dass ihre Basis zu der zweiten Kammer (7) weist.

3. Gasfeder nach Anspruch 1 oder 2,
**dadurch gekennzeichnet, dass**
die Mittel auch einen Hohlraum (4A) umfassen, der innerhalb der Stange (4) vorgesehen ist und es einem entsprechenden Bereich des länglichen Elementes, das sich durch die Öffnung (10) erstreckt, ermöglicht, in dieser zu gleiten und aufgenommen zu werden, wobei die Durchgänge ferner zwischen dem Hohlraum (4A) und der zweiten Kammer vorgesehen sind.

4. Gasfeder nach Anspruch 3,
**dadurch gekennzeichnet, dass**
das längliche Element aufweist:
- eine Form (11A), die einen konstanten Querschnitt relativ zu der Mehrzahl von Ebenen sicherstellt, die sich orthogonal zu der Verschiebungsrichtung des Kolbens erstrecken, oder
- eine Form (11B), die einen einzelnen vergrößerten Bereich (15) an dem Endpunkt des länglichen Elementes aufweist, der zu dem Kolben weist, oder
- eine Form (11C) mit einem vergrößerten Bereich (15), der an dem zu dem Kolben weisenden Endpunkt des länglichen Elementes vorgesehen ist, und mit einem zweiten vergrößerten Bereich (17), der an dem gegenüberliegenden Endpunkt des länglichen Elementes vorgesehen ist, der benachbart zu der zweiten Basis (20) angeordnet ist, oder
- eine Form mit einem einzelnen vergrößerten Bereich (17), der an dem Endpunkt des länglichen Elementes vorgesehen ist, der benachbart zu der zweiten Basis (20) angeordnet ist.

5. Gasfeder nach einem der vorhergehenden Ansprüche,
**dadurch gekennzeichnet, dass**
die Öffnung (10) in dem Kolben (2) eine Verjüngung (10A) aufweist, die angrenzend zu der ersten Kammer (6) angeordnet ist.

6. Gasfeder nach Anspruch 4 oder 5,
**dadurch gekennzeichnet, dass**
der Durchmesser (D) des ersten vergrößerten Bereiches (15) nur geringfügig kleiner als der Durchmesser (D1) der Verjüngung (10A) ist, und dass der Durchmesser (d) des zentralen Körperbereiches des länglichen Elementes (11B, 11C) bedeutend kleiner als der Durchmesser (D1) der Verjüngung (10A) ist.

7. Gasfeder nach einem der vorhergehenden Ansprüche,
**dadurch gekennzeichnet, dass**
während eines Bereiches des Kompressionshubs oder des Rückhubs derselben das längliche Element (11,11A, 11B, 11C) selektiv in die Öffnung (10) eingeführt und von dieser weg bewegt wird, bijektiv in Abhängigkeit von der Position des Kolbens relativ zu dem hohlen Gehäuse (1).

8. Gasfeder nach Anspruch 2,
**dadurch gekennzeichnet, dass**
an der äußeren zylindrischen Fläche des Kolbens (2) eine ringförmige Nut (16) vorgesehen ist, und dass die unidirektionale Dichtung (19) wenigstens teilweise in der ringförmigen Nut (16) aufgenommen ist.

9. Gasfeder nach einem der vorhergehenden Ansprüche,
**dadurch gekennzeichnet, dass**
in der zweiten Basis (20) eine Durchgangsbohrung (30) vorgesehen ist, und dass das längliche Element (11, 11A, 11B, 11C) entfernbar von der Außenseite unter wechselseitigem, bevorzugt schraubenartigen Gewindeeingriff mit der zweiten Basis (20) angeordnet ist.

10. Gasfeder nach einem der vorhergehenden Ansprüche,
**dadurch gekennzeichnet, dass**
das längliche Element (11, 11A, 11B, 11C) dazu geeignet ist, derart vorgesehen zu werden, dass es dazu geeignet ist, lösbar in selektiv definierbaren Positionen relativ zu der Basis arretiert zu werden.

## Revendications

1. Ressort à gaz, en particulier du type utilisé dans des presses de mise en forme de tôles, comprenant :
- un carter creux, de préférence cylindrique, (1) comprenant deux embases parallèles opposées (20, 21), dans lesquelles une première embase (21) comporte un orifice (23);
- un piston (2) adapté pour coulisser à l'intérieur dudit carter creux, ladite première embase (21) formant un élément de butée empêchant ledit piston de coulisser hors dudit carter creux;
- une tige (4) solidement fixée à l'une de ses extrémités sur une partie centrale dudit piston et passant au travers dudit orifice (23) de ladite première embase (21) ;
- une première chambre à volume variable (6) et une seconde chambre à volume variable (7) aménagées à l'intérieur dudit cylindre et séparées l'une de l'autre par ledit piston;
- dans lequel ladite première chambre à volume variable (6) est délimitée par une face dudit piston et par des parties de la surface interne dudit carter creux (1) qui ne contiennent pas ladite tige;
- des moyens adaptés pour permettre l'écoulement d'un gaz dans les deux directions vers et à partir desdites deux chambres avec un débit réglable de manière sélective ;
- un élément allongé (11, 11A, 11B, 11C) aménagé sur la seconde embase (20) dudit carter creux et en saillie vers l'intérieur à l'intérieur de ladite première chambre (6);
- une ouverture (10) aménagée de manière à s'étendre au travers du piston (2) et adaptée pour permettre un déplacement d'une partie dudit élément allongé (11) et la recevoir en elle ; et
- des passages (13) adaptés pour permettre un écoulement de gaz à partir de ladite ouverture (10) à l'intérieur de ladite seconde chambre (7), ou vice versa,
**caractérisé en ce que** :
entre la paroi interne dudit carter creux (1) et la paroi cylindrique externe dudit piston, il est aménagé un joint d'étanchéité unidirectionnel orienté de manière à empêcher le passage de gaz à partir de ladite seconde chambre à volume variable (7) à l'intérieur de ladite première chambre à volume variable (6).

2. Ressort à gaz selon la revendication 1, **caractérisé en ce que** ledit joint d'étanchéité unidirectionnel (19) comporte une lèvre souple (18) ayant une forme annulaire en cône tronqué aménagée de telle sorte que son embase fait face à ladite seconde chambre (7).

3. Ressort à gaz selon la revendication 1 ou la revendication 2, **caractérisé en ce que** lesdits moyens comprennent également une cavité (4A), aménagée à l'intérieur de ladite tige (4), adaptée pour permettre à une partie respective dudit élément allongé de passer au travers de ladite ouverture (10) de manière à coulisser et d'être logée dans celle-ci, lesdits passages étant en outre aménagés entre ladite cavité (4A) et ladite seconde chambre.

4. Ressort à gaz selon la revendication 3, **caractérisé en ce que** ledit élément allongé comprend :
- une forme (11A) assurant une coupe transversale constante par rapport à la pluralité de plans qui s'étendent de manière orthogonale à la direction de déplacement dudit piston, ou
- une forme (11B) ayant pour caractéristique une partie agrandie unique (15) correspondant à l'extrémité dudit élément allongé qui fait face audit piston, ou
- une forme (11C) comportant une partie agrandie (15) aménagée à l'extrémité dudit élément allongé qui fait face audit piston, et une seconde partie agrandie (17) aménagée à l'extrémité opposée dudit élément allongé qui repose à proximité de ladite seconde embase (20), ou
- une forme comportant une partie agrandie unique (17) aménagée à l'extrémité dudit élément allongé qui est située à proximité de ladite seconde embase (20).

5. Ressort à gaz selon l'une quelconque des revendications précédentes, **caractérisé en ce que** ladite ouverture (10) aménagée dans ledit piston (2) comporte un étranglement (10A) aménagé de manière contiguë à ladite première chambre (6).

6. Ressort à gaz selon la revendication 4 ou la revendication 5, **caractérisé en ce que** le diamètre (D) de ladite première partie agrandie (15) est juste légèrement plus petit que le diamètre (D1) dudit étranglement (10A), et **en ce que** le diamètre (d) de la partie centrale de corps dudit élément allongé (11B, 11C) est significativement plus petit que ledit diamètre (D1) dudit étranglement (10A).

7. Ressort à gaz selon l'une quelconque des revendications précédentes, **caractérisé en ce que**, au cours d'une partie de la course de compression ou de la course de rappel de celui-ci, ledit élément allongé (11, 11A, 11B, 11C) est introduit de manière sélective dans ladite ouverture (10) et sorti de celle-ci, subjectivement dans les deux directions en fonction de la position dudit piston par rapport audit carter creux (1).

8. Ressort à gaz selon la revendication 2, **caractérisé en ce qu'**il est aménagé sur la surface cylindrique externe dudit piston (2) une gorge annulaire (16), et **en ce que** ledit joint d'étanchéité unidirectionnel (19) est logé au moins en partie dans ladite gorge annulaire (16).

9. Ressort à gaz selon l'une quelconque des revendications précédentes, **caractérisé en ce qu'**un alésage traversant (30) est aménagé dans ladite seconde embase (20), et **en ce que** ledit élément allongé (11, 11A, 11B, 11C) est appliqué de manière amovible à partir de l'extérieur dans un engagement mutuel, de préférence de type à vis, à savoir un engagement par filetage avec ladite seconde embase (20).

10. Ressort à gaz selon l'une quelconque des revendications précédentes, **caractérisé en ce que** ledit élément allongé (11, 11A, 11B, 11C) est adapté de telle sorte qu'il est aménagé de manière à être bloqué de manière amovible dans des positions pouvant être définies de manière sélective par rapport à ladite embase.
